(19) Europäisches Patentamt

European Patent Office

Office européen des brevets

(11) EP 0 921 374 B1

(12) EUROPÄISCHE PATENTSCHRIFT

(45) Veröffentlichungstag und Bekanntmachung des Hinweises auf die Patenterteilung:
**13.04.2005 Patentblatt 2005/15**

(51) Int Cl.⁷: **G01B 21/30**, G06T 7/00

(21) Anmeldenummer: **98122889.3**

(22) Anmeldetag: **02.12.1998**

(54) **Verfahren zur Erkennung von Abweichungen der Oberflächenform von einer vorgegebenen Form durch eine Verarbeitung mit einem künstlichen neuronalen Netz**

Method to detect deviation of a surface form from a given form by computation with an artificial neural network

Procédé de détection de la déviation de la forme d'une surface par rapport à une forme donnée par calcul à l'aide d'un réseau neuronal artificiel

(84) Benannte Vertragsstaaten:
**ES FR GB IT SE**

(30) Priorität: **03.12.1997 DE 19753620**

(43) Veröffentlichungstag der Anmeldung:
**09.06.1999 Patentblatt 1999/23**

(73) Patentinhaber: **INB Vision AG**
**39120 Magdeburg (DE)**

(72) Erfinder:
• **Michaelis, Bernd Prof.Dr.-Ing.**
**39175 Biederitz (DE)**
• **Lilienblum, Tilo Dipl.-Ing.**
**39104 Magdeburg (DE)**
• **Günther, Georg Dr.**
**07751 Cospeda (DE)**
• **Bauer, Gerhard Dipl.-Ing.**
**07745 Jena (DE)**
• **Küchel, Michael Prof.-Dr.**
**73447 Oberkochen (DE)**

(74) Vertreter: **Leinung, Günter**
**Patentanwalt,**
**Olvenstedter Strasse 15**
**39108 Magdeburg (DE)**

(56) Entgegenhaltungen:
• **LILIENBLUM T ET AL: "ERROR DETECTION OF THE SURFACE FORM BY 3-D MEASUREMENT AND NEURAL NETWORKS" IMAGE AND MULTIDIMENSIONAL DIGITAL SIGNAL PROCESSING. PROCEEDINGS OF IMDSP. IMAGE AND MULTI-DIMENSIONAL DIGITAL SIGNAL PROCESSING WORKSHOP, INFIX, SANKT AUGUSTIN, DE, 12. Juli 1998 (1998-07-12), Seiten 17-20, XP008013517**
• **LILIENBLUM T ET AL: "IMPROVEMENT OF 3-D DATA WITH NEURAL NETWORKS" JOURNAL OF MICROELECTRONIC SYSTEMS INTEGRATION, PLENUM PRESS, NEW YORK, NY, US, Bd. 5, Nr. 1, März 1997 (1997-03), Seiten 53-64, XP008013516 ISSN: 1070-0056**
• **LILIENBLUM T ET AL: "IMPROVEMENT OF 3-D DATA BY NEURAL NETWORKS" PROCEEDINGS INTERNATIONAL WORKSHOP ON NEURAL NETWORKS FOR IDENTIFICATION, CONTROL, ROBOTICS, AND SIGNAL/IMAGE PROCESSING, XX, XX, 21. August 1996 (1996-08-21), Seiten 203-211, XP001134986**
• **CHEN D S ET AL: "Surface reconstruction using robust backpropagation" NEURAL NETWORKS, 1994. IEEE WORLD CONGRESS ON COMPUTATIONAL INTELLIGENCE., 1994 IEEE INTERNATIONAL CONFERENCE ON ORLANDO, FL, USA 27 JUNE-2 JULY 1994, NEW YORK, NY, USA,IEEE, 27. Juni 1994 (1994-06-27), Seiten 4072-4077, XP010127820 ISBN: 0-7803-1901-X**

- VALLE M ET AL: "A VLSI IMAGE PROCESSING ARCHITECTURE DEDICATED TO REAL-TIME QUALITYCONTROL ANALYSIS IN AN INDUSTRIAL PLANT" REAL-TIME IMAGING, ACADEMIC PRESS LIMITED, GB, Bd. 2, Nr. 6, 1. Dezember 1996 (1996-12-01), Seiten 361-371, XP000656197 ISSN: 1077-2014

## Beschreibung

Die Erfindung betrifft ein Verfahren zur Erkennung von Fehlern der Oberflächenform eines Objektes, bei dem 3D-Meßdaten der Oberfläche des zu prüfenden Objektes (nachfolgend als Prüfobjekt bezeichnet) mittels eines künstlichen neuronalen Netzes mit den 3D-Meßdaten der Oberfläche eines als fehlerfrei geltenden Objektes (sog. Masterteil) verglichen werden. Die Erfindung ist bevorzugt für solche Meßaufgaben einsetzbar, bei denen die Fehler im Vergleich zur Größe des Prüfobjektes sehr klein sind und das Prüfobjekt z. B. aus Gründen der Aufwandssenkung nur mit geringerer Genauigkeit in der Meßposition justiert werden kann.

Derartige Meßaufgaben bestehen z.B. bei der Überwachung der Fertigung großflächiger tiefgezogener Blechteile.

Ein bekanntes Verfahren zur Erkennung von Fehlern der Oberflächenform ist z.B. das Vermessen eines Masterteiles und die Subtraktion dieser Meßwerte von den Meßwerten des Prufobjektes. Sind die Fehler im Vergleich zur Größe des Prüfobjektes aber sehr klein, erhöhen sich die Anforderungen an diese Justierung.

So kann z. B. mittels einer 3D-Oberflächenvermessung das Höhenprofil des Prüfobjektes mit einer Oberfläche von ca. 1 m x 1 m vermessen werden. Auftretende Fehler zeichnen sich durch eine Abweichung der Höhenkoordinate von einer Sollform aus. Die Empfindlichkeit der Fehlererkennung soll bei 0,1 mm liegen.

Bei der Größe des Prüfobjektes ist eine Justierung auf 0,1 mm genau nicht oder nur mit erheblichem Aufwand möglich. Meistens sind die Prüfobjekte nicht nur verschoben, sondern auch in sich verbogen und verdreht.

Eine genaue Justierung ist aber erforderlich, wenn durch einfache Differenzbildung mit den Meßwerten eines Masterteils der Fehler erkannt werden soll. Ist die Justierung aber nur auf z. B. 1 cm genau möglich, so sind die durch fehlerhafte Justierung entstehenden Fehler 100 mal so groß wie der eigentlich zu detektierende Fehler. Eine Erkennung des Fehlers ist in diesem Fall nur noch in Ausnahmefällen möglich. Eine automatische Fehlererkennung ist in diesem Fall nahezu ausgeschlossen.

Es ist bekannt, künstliche neuronale Netze einzusetzen, um die Qualitätsprüfung und Fehlerklassifizierung von Prüfobjekten weitgehend zu automatisieren (z. B. DE4207728 A1, DE4321042 C1). Der sinnvolle Einsatz eines künstlichen neuronalen Netzes zur Auswertung der infolge unzureichender Justiergenauigkeit verfälschten Differenzwerte zwischen den Höhenkoordinaten von Masterteil und Prüfobjekt würde jedoch z. B eine a-priori-Information über die Größe der positionsabhängigen Fehler voraussetzen. Eine derartige Information ist in den genutzten Netzen (z. B. DE4207728 A1, DE4321042 C1) nicht enthalten, so daß die Fehlererkennung unter Anwendung dieser neuronalen Netzes offenbar unzureichende Ergebnisse liefert.

Eine andere Möglichkeit ist, das Prüfobjekt mit Hilfe von Polynomen zu approximieren und anhand des Approximationsfehlers auf den Fehler des Prüfobjektes zu schließen. Auf Grund der Komplexität der zu vermessenden Prüfobjektes ist auch diese Verfahrensweise oft nicht möglich.

In diesem Fall ist es nicht mehr möglich, durch Differenzbildung eines Masterteils mit dem Meßteil automatisch Fehler zu detektieren.

Der Erfindung liegt die Aufgabe zugrunde, ein Verfahren weiterzuentwickeln, bei dem der Einfluß der Justiergenauigkeit des Prüfobjektes auf das Prüfungsergebnis weitgehend oder vollständig beseitigt wird, so daß mit geringem Justieraufwand auch kleine Fehler unter Anwendung eines neuronalen Netzes automatisch detektierbar sind.

Diese Aufgabe wird mit den in Ansprüchen 1 und 2 angegebenen Merkmalen gelöst. Vorteilhafte Weiterbildungen ergeben sich aus den Unteransprüchen.

Die in den Ansprüchen 1 und 2 definierte Erfindung stellt eine Weiterentwicklung des folgenden Grundgedarkens dar, wie er aus z.B. Lilienblum et al. : "Improvement of 3D Data by Neural Networks", Proceedings of the International Workshop on Neural Networks for Identification, Control, Robotics, and Signal/Image Processing, IEEE, 21. August 1996, pp. 203-211, bekannt ist : Unter Verzicht auf die Justiergenauigkeit des Prüfobjektes wird mittels des neuronalen Netzes aus den Meßdaten des Prüfobjektes ein solches Recallergebnis erzeugt, das den Geometriedaten eines Masterteils entspricht, welches in Lage und Form eine bestmögliche Übereinstimmung mit dem Prüfobjekt besitzt. Die Differenzbildung zwischen dem so erhaltenen Recallergebnis und den Meßdaten des Prüfobjektes liefert die gewünschten Daten für die Fehler des Prüfobjektes.

Es erfolgt daher eine Abkehr von der Differenzbildung zwischen den Geometriedaten eines in einer vorgegebenen Lage positionierten Masterteils und eines an diese Lage bestmöglich angepaßten Prüfobjektes. Auf diese Weise kann auf hohen Aufwand verzichtet werden, um die Lage des Prüfobjektes in die Lage eines vorgegebenen Masterteils einzujustieren.

Der Grundgedanke des erfindungsgemäße Verfahren ist grundsätzlich nicht nur für 3D-Meßaufgaben geeignet. Er kann auch als Lösungsansatz für andere Aufgaben der Fehlererkennung und Qualitätsprüfung genutzt werden.

Im folgenden ist die Erfindung anhand von Ausführungsbeispielen unter Bezugnahme auf die beiliegenden Zeichnungen mit weiteren Einzelheiten näher erläutert. Dabei zeigen

Fig. 1     eine schematische Darstellung des Ablaufs der Lern- und Recallphase nach der Erfindung,
Fig. 2     eine schematische Darstellung des neuronalen Netzes (links) und der Verarbeitung der Daten einer Oberfläche (rechts),

Fig. 3 eine gemäß der Erfindung berechnete Differenz bei einem fehlerfreien Objekt,

Fig. 4 eine gemäß der Erfindung berechnete Differenz bei einem fehlerhaften Objekt.

Zur Erkennung von Abweichungen der Oberflächenform eines Prüfobjektes von einer vorgegebenen Form wird mit Hilfe der Erfindung folgendermaßen vorgegangen.

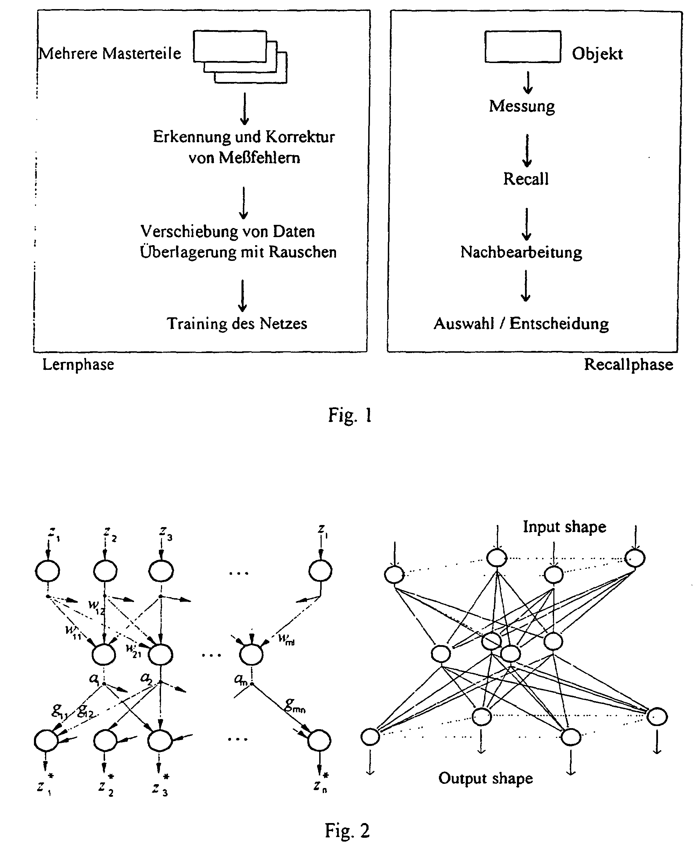

In der Lernphase (Fig. 1, linke Seite) werden mehrere (fehlerfreie) Masterteile in unterschiedlichen Positionen und Lagen vermessen. Die Meßdaten werden in einem künstlichen neuronalen Netz (Fig. 2) gespeichert. Dadurch wird die gesamte Bandbreite der möglichen Variationen der Masterteile erfaßt.

Um den Einfluß eventueller Meßfehler zu reduzieren, erfolgt in einem Ausfürungsform der Erfindung vor der Speicherung im neuronalen Netz eine Fehlererkennung. Bestimmte Meßfehler können dann beseitigt werden bzw. die entsprechenden Datensätze werden nicht in das neuronalen Netz eingespeichert.

Durch zusätzliches Verschieben einzelner Datensätze können zusätzliche Datensätze erzeugt werden. Dadurch kann die Anzahl der gespeicherten Daten erhöht werden.

In der Recallphase (Fig. 1, rechte Seite) wird das Prüfobjekt vermessen. Die Meßwerte werden in das neuronale Netz eingegeben. In den Gewichten des neuronalen Netzes sind nach der Lernphase ein oder mehrere Masterteile in unterschiedlichen Positionen gespeichert.

Am Ausgang des neuronalen Netzes bleiben nur diejenigen Anteile der Meßdaten übrig, die den gespeicherten Masterteilen entsprechen. Fehler, also Abweichungen von diesen Masterteilen werden nicht weitergeleitet. Nach Differenzbildung zwischen dem gemessenen Teil und dem Recallergebnis bleiben nur die gesuchten Fehler übrig. In einem weiteren Ausführungsbeispiel der Erfindung wird die Differenz zusätzlich gegtattet. Die Fehler können dann mit Standardmethoden der Bildverarbeitung ausgewertet werden.

Der Aufbau des neuronalen Netzes entsprechend [Lilienblum, T.; Albrecht, P.; Michaelis, B.: Improvement of 3-D Data by Neural Networks, Journal of Microelectronic System Integration. Volume 5 (1997), S. 53-64] wird im folgenden beschrieben.

Es wird ein linearer und modifizierter Assoziativspeicher genutzt (Fig. 2). Es sollen als Eingangswerte die Koordinaten der Oberfläche bezogen auf die xy-Ebene oder bezogen auf die Bildpunkte des Kamerasensors mit der Matrix $Z$ bezeichnet werden. Der Einfachheit halber wird diese Matrix $Z$ im folgenden als Vektor $\bar{z}$ beschrieben (Vektorisierung). Unter Umständen ist es auch notwendig nur einen bestimmten Teil der Meßpunkte für die Auswertung zu verwenden. Diese Meßpunkte können z. B. durch eine Matrix der Größe von $Z$ mit einer entsprechenden Gültigkeitsinformation zu jedem Meßpunkt erfolgen. Diese Matrix soll im folgenden als Maske bezeichnet werden.

Im Assoziativspeicher werden mittelwertfreie Meßdaten verarbeitet. D.h., von den für das Training bzw. die Berechnung der Gewichte verwendeten Datensätzen (im folgenden als Trainingsdaten bezeichnet) wird zunächst ein Mittelwertdatensatz gebildet, der dem Prototyp des Meßobjektes entspricht. Dieser Mittelwert wird von den Eingangsdaten des Assoziativspeichers subtrahiert und zu den Ausgangsdaten wieder addiert. Der Assoziativspeicher verarbeitet nur die Variabilität des Meßobjektes. Durch dieses Vorgehen vereinfachen sich mathematische Zusammenhänge und es können entsprechende Standardalgorithmen verwendet werden (z.B. die Karhunen-Loéve-Transformation). Im neuronalen Netz kann dieser Mittelwert auch durch entsprechende Offsetgrößen (Bias) dargestellt werden.

In Fig. 2 (linkes Bild) sind $z_l...z_l$ die Elemente des Eingangsvektors abzüglich des Mittelwertes. $z_i^*...z_\eta^*$ enthalten die Ausgangsdaten abzüglich dieses Mittelwertes. Das rechte Bild in Fig. 1 verdeutlicht die Verarbeitung einer Fläche mit diesem Netz.

Beim Einsatz des modifizierten Assoziativspeichers für diese Erfindung ist die Anzahl der Einund Ausgänge in der Regel gleich ($l=n$).

Mit der Festlegung des neuronalen Netzes auf lineare Verbindungen resultieren einfache Beziehungen. Die Matrizen $W$ und $G$ enthalten die Gewichte der entsprechenden neuronalen Schichten. Die korrigierten Werte $\vec{z}^*$ werden mit Hilfe der Matrizen Wund G sowie den Ausgangswerten $\vec{a}$ der Neuronen der Hidden-Schicht folgendermaßen berechnet:

$$\vec{a} = W\vec{z} \tag{1},$$

da.

$$\vec{z}^* = G\vec{a} \tag{2}.$$

folgt:

$$\vec{z}* = GW\vec{z} \tag{3}$$

Wenn $m \ll l, n$, findet in der Hidden-Schicht (Vektor $\bar{a}$) normalerweise eine beträchtliche Datenreduktion statt. Dadurch können die erforderlichen Glättungseffekte erreicht werden.

Da in der zweiten Schicht (Gewichtsmatrix **W**) entsprechend der vorgeschlagenen Lösung zweckmäßig eine Transformation der Daten mit Hilfe der Karhunen-Loéve-Transformation erfolgt, sind die Gewichtsvektoren [$w_{11}$ $w_{12}$ ... $w_{1l}$] ... [$w_{m1}$ $w_{m2}$ ... $w_{ml}$] orthonormal. Die Gewichte können durch konventionelle Lösung des Eigenwertproblems oder durch die Hebbsche Lernregel [Oja, E.: A Simplified Neuron Model as a Principal Component Analyzer. J. Math. Bio., Vol. 15, 1982, pp. 267-273] bestimmt werden.

Die Gewichte der dritten Schicht werden mit $G = W^T$ berechnet.

Da die Gewichte des Netzes entsprechend der Karhunen-Loéve-Transformation berechnet werden, konzentriert sich die Information über das eingegebene Meßobjekt in den Ausgängen der ersten Neuronen der Hidden-Schicht $a_1 ... a_m$. Der Rekonstruktionsfehler

$$R_m = \overline{\left| \vec{z} - \sum_{\mu=1}^{m} \vec{g}_\mu a_\mu \right|^2} \tag{4}$$

wird minimal für jede spezifische Anzahl von Neuronen $m$ im Hidden-Layer. $\vec{g}_\mu$ entspricht der $\mu$-ten Spalte der Matrix **G**. Objektformen, die in der Lernphase nicht trainiert werden (zu detektierende Fehler), werden geglättet. Ein größeres $m$ läßt aber eine größere Variabilität des Meßobjektes zu.

Die Verarbeitung der Daten mit dem modifizierten Assoziativspeichers soll im folgenden als Recall bezeichnet werden. Die Verarbeitung der Meßdaten läßt sich dann folgendermaßen zusammenfassen:

Nach der Messung ergibt sich die Meßpunktmatrix **Z**. Diese wird auf den Vektor $\vec{z}$ abgebildet.

$$Z \rightarrow \vec{z} \tag{5}$$

Das Recallergebnis des Assoziativspeichers

$$\vec{z}* = W^T [W(\vec{z} - \vec{\mu})] + \vec{\mu} \tag{6}$$

wird wieder in eine Matrix umgeformt. **W** ist die Gewichtsmatrix, $\vec{\mu}$ der Mittelwertvektor der Trainingsdaten.

$$\vec{z}* \rightarrow Z \tag{7}$$

Aus der Differenz beider Matrizen ergibt sich eine entsprechende Fehlermatrix **F**, die den Abweichungen von den trainierten Masterteilen entspricht.

$$F = Z* - Z \tag{8}$$

Die Verdeutlichung der mit dem erfindungsgemäßen Verfahren erreichbaren Resultate sollen dargestellt werden an realen Meßobjekten mit einer Oberfläche von ca. 1m x 1m. Diese Datensätze hatten eine Größe von 480x480 Pixel.

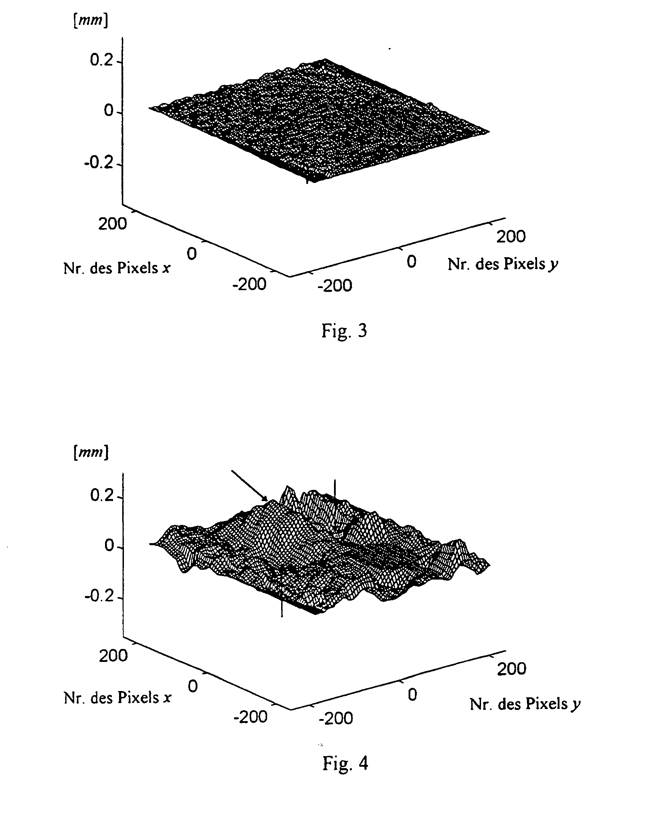

Zwei Objekte wurden als in Ordnung eingestuft. Von diesen wurden 41 Datensätze gewonnen (in etwas unterschiedlicher Position mit Abweichungen im cm-Bereich). Bestimmte Bereiche konnten nicht vermessen werden und wurden ausgespart. Diese sind in Fig. 3 und 4 auf Null gesetzt.

Ein weiteres Objekt, das als nicht in Ordnung eingestuft wurde, wurde ebenfalls vermessen.

Fig. 3 zeigt die berechnete Differenz **F** bei dem fehlerfreien Objekt und Fig. 4 bei einem fehlerhaften Objekt. Der in Fig. 3 untersuchte Datensatz wurde nicht zum Trainieren des Netzes verwendet. Andere Datensätze dieses Objektes (in etwas veränderter Position) wurden aber zum Training genutzt.

Wie an den Bildern zu erkennen ist, sind die berechneten Differenzen beim fehlerhaften Objekt bedeutend größer als beim fehlerfreien Objekt. Die Fehler (mit Pfeilen markiert) konnten erkannt werden. Die anderen in Fig. 4 scheinbar als Fehler detektierten Bereiche entstehen durch Überschwingen. Wenn nur überprüft werden soll, ob das Teil in Ordnung ist, stellen diese fälschlicherweise als zusätzliche Fehler erkannten Bereiche kein Problem dar. Treten in der berechneten Differenz Störungen auf, können diese mit Standardalgorithmen der Bildverarbeitung verringert oder beseitigt werden.

Es ist auch möglich dieses Verfahren mit Hilfe von Spezial-Hardware zu realisieren. Dafür gibt es mehrere Möglichkeiten (Neurocomputer, Signalprozessor). Prinzipiell müssen nur die beiden Matrixoperationen

$$\vec{a} = W(\vec{z} - \vec{\mu}), \qquad (9)$$

$$\vec{z}^* = W^T \vec{a} + \vec{\mu} \qquad (10)$$

realisiert werden. Problematisch ist dabei die große Anzahl der Gewichte. Bei 16 bit Genauigkeit, 512×512 Bildpunkten und 32 Hidden-Neuronen des neuronalen Netzes (Zeilen der Matrix $W$) ergibt sich ein Speicherplatzbedarf von 16 MB. Um den Verarbeitungsprozeß in angemessener Zeit realisieren zu können, müssen diese 16 MB sehr schnell vom Prozessor geladen werden können. Bei den meisten Systemen ist dieser Spezialfall nicht vorgesehen und muß durch zusätzliche Erweiterungen realisiert werden.

Bei der Implementierung dieser Erfindung auf einem CNAPS-Neurocomputer kann ein Recall mit 512x512 Bildpunkten, 16 bit und 32 Hidden-Neuronen (Neuronen der Hidden-Schicht) in 2,5 s realisiert werden. Durch Einsatz zusätzlicher Hardware zum Austausch der Gewichte (Matrix W) kann diese Zeit auf 0,7 s reduziert werden.

**Patentansprüche**

1. Verfahren zur Erkennung von Abweichungen der Oberflächenform von einer vorgegebenen Form durch eine dreidimensionale Messwerterfassung und eine nachfolgende Verarbeitung mit einem künstlichen neuronalen Netz, wobei

   - nach Eingabe der Messdaten des Prüfobjektes in das neuronale Netz ein Recall des neuronalen Netzes erfolgt,
   - als signifikante Daten für die Fehler des Prüfobjektes die durch gelignete Glättungsfilter geglättete Differenz zwischen den Messdaten des Prüfobjektes und den Recall-Daten des neuronalen Netzes verwendet wird.

2. Verfahren zur Erkennung von Abweichungen der Oberflächenform von einer vorgegebenen Form durch eine dreidimensionale Messwerterfassung und eine nachfolgende Verarbeitung mit einem künstliche neuronalen Netz, wobei

   - in der Lernphase, vor der Speicherung in dem neuronalen Netz, Fehler der Messdaten von vermessenen Masterteilen beseitigt werden,
   - nach Eingabe der Messdaten des Prüfobjektes in das neuronale Netz ein Recall des neuronalen Netzes erfolgt und
   - als signifikante Daten für die Fehler des Prüfobjektes die Differenz zwischen den Messdaten des Prüfobjektes und den Recall-Daten des neuronalen Netzes verwendet werden.

3. Verfahren nach einem der Ansprüche 1 und 2, **dadurch gekennzeichnet, dass** bestimmte Messpunkte durch eine Matrix mit einer entsprechenden Gültigkeitsinformation ausmaskiert werden.

4. Verfahren nach einem der vorhergehenden Ansprüche, **dadurch gekennzeichnet, dass** während der Lemphase durch Verschieben einzelner Messdaten zusätzliche Datensätze erzeugt werden.

**Claims**

1. Procedure for identifying non-conformities in the shape of the surface as against a prescribed shape by means of three-dimensional measured value acquisition and subsequent processing with an artificial neuronal network, whereby

- A recall of the neuronal network takes place after the measured values for the test object have been entered into the neuronal network.

- The smoothed difference between the measured values of the test object and the recall data of the neuronal network, smoothed by means of suitable smoothing filters, is taken as the significant data for the faults in the test object.

2. Procedure for identifying non-conformities in the shape of the surface as against a prescribed shape by means of three-dimensional measured value acquisition and subsequent processing with an artificial neuronal network, whereby

- Measured value errors for dimensionally measured master components are eliminated during the learning phase, prior to being stored to memory in the neuronal network,

- A recall of the neuronal network takes place after the measured values for the test object have been entered into the neuronal network, and

- The difference between the measured values of the test object and the recall data of the neuronal network is taken as the significant data for the faults in the test object.

3. Procedure in accordance with one of the claims I and 2, that are distinguished by the fact that
Certain measuring (reading) points are masked-off by means of a matrix with the corresponding validity information.

4. Procedure in accordance with one of the aforementioned claims that are distinguished by the fact that
Additional data records are generated by relocating individual measuring data during the learning phase.


**Revendications**

1. Procédure pour l'identification des écarts de surface d'une forme donnée, par enregistrement de valeurs mesurées tridimensionnelles, suivie d'un traitement avec un réseau neuronal artificiel, ce qui

- entraîne un rappel du réseau neuronal après la saisie des données de mesure de l'objet test dans le réseau neuronal.

- implique que l'on utilise comme données significatives des erreurs de l'objet test, les valeurs de différence entre les données de mesure de l'objet test et les données de rappel du réseau neuronal, lissées au moyen de filtres de lissage appropriés.

2. Procédure pour l'identification des écarts de surface d'une forme donnée, par enregistrement de valeurs mesurées tridimensionnelles, suivie d'un traitement avec un réseau neuronal artificiel, ce qui

- élimine, dans la phase d'apprentissage précédant l'enregistrement dans le réseau neuronal, les erreurs des données de mesure des pièces maîtresses mesurées.

- entraîne un rappel du réseau neuronal après la saisie des données de mesure de l'objet test dans le réseau neuronal.

- implique que l'on utilise comme données significatives des erreurs de l'objet test, les valeurs de différence entre les données de mesure de l'objet test et les données de rappel du réseau neuronal.

3. Procédure d'après l'une des revendications 1 et 2, **caractérisée par**

- le démasquage de certains points de mesure par une matrice possédant un paramètre de validité approprié.

4. Procédure d'après l'une des revendications 1 et 2, **caractérisée par**

- la génération de blocs de données supplémentaires par décalage de données de mesure individuelles pendant la phase d'apprentissage.

Mehrere Masterteile

Erkennung und Korrektur
von Meßfehlern

Verschiebung von Daten
Überlagerung mit Rauschen

Training des Netzes

Lernphase

Objekt

Messung

Recall

Nachbearbeitung

Auswahl / Entscheidung

Recallphase

Fig. 1

Input shape

Output shape

Fig. 2

[mm]

Nr. des Pixels x

Nr. des Pixels y

Fig. 3

[mm]

Nr. des Pixels x

Nr. des Pixels y

Fig. 4